# EUROPEAN PATENT APPLICATION

(11) **EP 1 460 514 A2**
(43) Date of publication of application: **22.09.2004**
(21) Application number: 04075612.4
(22) Date of filing: 26.02.2004
(51) Int. Cl.: G06F 1/00

(54) **Prevention of unauthorized software distribution**

(30) Priority: 18.03.2003 US 391108
(71) Applicant: Delphi Technologies, Inc., Troy, MI 48007 (US)
(72) Inventor: Lee, Long K., Brookfield, WI 53045 (US); Toms, Mona L., Carmel, IN 46032 (US); Thai, Hung D., Carmel, IN 46033 (US); McComas, Kathryn A., Kokomo, IN 46901 (US); Mitchell, Gary K., Kokomo, IN 46901 (US)
(74) Representative: Denton, Michael John

(57) **Abstract**

Royalty and other fee collection for software upgrades and updates is facilitated by generating a software package that is unique to the system on which it is to be installed. As a result, when a consumer purchases a software upgrade, the upgrade can only be used on one particular system. In one implementation, distribution of upgrades and updates for a vehicle audio system is controlled by encrypting the vehicle identification number (VIN) of a vehicle into the software package used for the upgrade or update. The software package can only be used to upgrade software residing on the vehicle corresponding to the VIN. As a result, unauthorized distribution of the software package is prevented.

## Description

### TECHNICAL BACKGROUND

The present invention relates generally to software systems. More particularly, the present invention relates to license management techniques for such software systems.

### BACKGROUND OF THE INVENTION

Vehicle audio systems provide information and entertainment to many motorists daily. These audio systems typically include an AM/FM radio receiver. In addition, many vehicle audio systems include devices for listening to previously recorded media, such as cassettes and compact discs (CDs). Some vehicle audio systems also have video capabilities, *e.g.*, a digital versatile disc (DVD) player

Traditionally, consumers have acquired music by purchasing CDs through conventional distribution channels. These distribution channels, while effective, have nonetheless presented certain limitations. For example, some consumers may be reluctant to purchase a CD on the basis of a single song heard on the radio. In addition, traditional distribution channels tend to favor established artists, who enjoy the marketing benefits of major recording labels. Unestablished artists, by comparison, often experience significant obstacles in distributing their work. These limitations have contributed to the growing use of the Internet to distribute music. In particular, various file sharing networks allow users to download and listen to audio files. File sharing networks overcome some of the limitations of traditional distribution channels. For example, music can be acquired on a song-by-song basis. In addition, unestablished artists can distribute their work directly to consumers on file sharing networks without the need of a recording label. For these reasons, the Internet has become an increasingly popular distribution channel.

File sharing networks typically use one or more compressed audio formats to store and transfer audio files. These formats include, for example, the MP3, WMA, AAC, and Real Audio formats. Compressed audio formats offer certain advantages relative to other audio formats. For example, audio information can be stored in relatively smaller files. As a result, using a compressed audio format, a standard disc can store more music than the 74 minutes provided in the traditional CD audio format. In addition, with reduced file size, audio files can be transferred in less time.

Many users of file sharing networks store audio files on removable media, such as CDs, for portability. However, many vehicle audio systems equipped with CD players are configured to read the conventional CD audio format only. Even newer vehicle audio systems that are configured to read compressed audio formats are often limited to selected compressed audio formats, e.g., reading MP3 files only. With the development of new compressed audio formats, it is desirable that vehicle audio systems be capable of being upgraded to accommodate new technologies.

Some CD players in vehicle audio systems are configured for after-market upgrading. For example, some CD players are configured to read discs recorded in the CD-ROM format commonly used by computers. Vehicle audio systems equipped with such CD players can upgrade software in a microprocessor, digital signal processor (DSP), flash memory integrated circuit (IC), or other memory storage device by reading new software files from a CD-ROM and storing the new files in the appropriate memory storage device. For example, some CD players can read new software from a CD-ROM disc and store the new software files in a flash memory IC to upgrade compressed audio decoders that run in the DSP. In this way, CD players that are factory-configured to read MP3 files can subsequently be upgraded to read other compressed audio formats, such as MP3 Pro, WMA, AAC, and Real Audio. This method of upgrading a vehicle audio system can also be used, for example, to remedy software bugs or add new features. In each case, new software can be written to a CD-ROM disc and distributed to end users, dealers, vehicle assembly lines, or to other locations such that, when the CD-ROM disc is inserted into the CD player, the software is upgraded.

Some such upgrades require the payment of royalties or other fees. For example, upgrading a CD player to read MP3, WMA, or AAC files requires the collection of user fees or licensing fees. Conventional upgrade techniques do not adequately provide for collection of these fees. This shortcoming is particularly limiting for the addition of compressed audio decoders to a CD player that has already been sold to a consumer. In this case, fees should be collected both by the manufacturer of the software used to upgrade the CD player and also by the owner of the intellectual property covering the new compressed audio decoder. Collection of fees is difficult because conventional upgrade techniques generate CD-ROMs that can be shared among multiple end users.

### SUMMARY OF THE INVENTION

According to an example embodiment of the present invention, a medium to configure a processor-controlled system operating in an operating environment is generated by receiving a set of instructions to configure the processor-controlled system. The set of instructions is encrypted as a function of an identification code unique to the operating environment, such as a vehicle identification number (VIN) unique to the vehicle in which the processor-controlled system is installed.

Another embodiment is directed to a method to configure a processor-controlled system operating in an operating environment. An encrypted set of instructions is received and decrypted to generate a validation code. The validation code is compared with a identification code unique to the operating environment. The processor-controlled system is configured as a function of the decrypted set of instructions only if the validation code matches the identification code.

Still another embodiment is directed to a method to configure a processor-controlled system operating in an operating environment. A set of instructions to configure the processor-controlled system is received. The set of instructions is encrypted as a function of an identification code unique to the operating environment, *e.g.*, a VIN unique to a particular vehicle. The encrypted set of instructions is subsequently received in the processor-controlled system. A validation code is generated as a function of the encrypted set of instructions and is compared with the identification code. The processor-controlled system is configured as a function of the encrypted set of instructions only if the validation code matches the identification code. The above methods may be embodied in processor-readable media.

In another embodiment, a processor-readable medium contains a set of processor-executable instructions for configuring a processor-controlled system operating in an operating environment. A validation code is encrypted into the set of processor-executable instructions. The set of processor-executable instructions is configured to be executed only if the validation code matches an identification code unique to the operating environment.

Yet another embodiment is directed to a processor-controlled system operating in an operating environment. The processor-controlled system includes an input subsystem configured to receive an encrypted set of instructions. A processor is coupled to the input subsystem and is configured to decrypt the encrypted set of instructions to generate a validation code. The processor compares the validation code with a identification code unique to the operating environment. The processor configures the processor-controlled system as a function of the decrypted set of instructions only if the validation code matches the identification code.

In another embodiment, a computer arrangement includes first and second computers in communication with each other. The first computer is configured to receive an identification code unique to an operating environment, *e.g.*, a VIN unique to a vehicle. The second computer receives the identification code from the first computer, encrypts a set of instructions to configure a processor-controlled system operating in the operating environment as a function of an identification code unique to the operating environment, and transmits the encrypted set of instructions to the first computer. The first computer may then create a processor-readable medium, such as a CD-ROM disc, in response to receiving the encrypted set of instructions.

Various embodiments of the present invention may provide certain advantages. Generating a software package that is unique to the system on which it is to be installed ensures that, when a consumer purchases a software upgrade, the upgrade can only be used on the particular system. More particularly, encrypting the vehicle identification number (VIN) of a vehicle into the software package ensures that the software package can only be used to upgrade software residing on the vehicle corresponding to the VIN. As a result, appropriate fee collection is facilitated.

Additional objects, advantages, and features of the present invention will become apparent from the following description and the claims that follow, considered in conjunction with the accompanying drawings.

### BRIEF DESCRIPTION OF THE DRAWINGS

The present invention will now be described, by way of example, with reference to the accompanying drawings, in which:
Figure 1 illustrates an example computer arrangement for configuring a processor-controlled system operating in an operating environment, according to an embodiment of the invention;
Figure 2 illustrates an example processor-controlled system according to another embodiment of the invention;
Figure 3 is a flow diagram illustrating an example method for generating a medium to configure a processor-controlled system operating in an operating environment, according to yet another embodiment of the invention;
Figure 4 is a flow diagram illustrating an example method for configuring a processor-controlled system operating in an operating environment, according to still another embodiment of the invention; and
Figure 5 is a flow diagram illustrating an example method for configuring a processor-controlled system operating in an operating environment, according to another embodiment of the invention.

### DESCRIPTION OF PREFERRED EMBODIMENTS

Various embodiments of the present invention facilitate royalty and other fee collection for software upgrades and updates by generating a software package that is unique to the system on which it is to be installed. As a result, when a consumer purchases a software upgrade, the upgrade can only be used on one particular system. Accordingly, unauthorized distribution of the software package is prevented.

The following description of various embodiments directed to a vehicle audio system is to be construed by way of illustration rather than limitation. This description is not intended to limit the invention or its applications or uses. For example, while various embodiments of the invention are described as being implemented in an audio system of a vehicle, it will be appreciated that the principles of the invention are applicable to other processor-controlled systems in a vehicle. Further, the invention may be practiced in connection with audio and other systems not incorporated in a vehicle.

In the following description, numerous specific details are set forth in order to provide a thorough understanding of various embodiments of the present invention. It will be apparent to one skilled in the art that the present invention may be practiced without some or all of these specific details. In other instances, well known process steps have not been described in detail in order to avoid unnecessarily obscuring the present invention.

The invention may be described in the general context of processor-executable instructions, such as program modules, being executed by a processor. Generally, program modules include routines, programs, objects, components, data structures, *etc*., that perform particular tasks or implement particular abstract data types. The invention may also be practiced in distributed processing environments in which tasks are performed by remote processing devices that are linked through a communications network or other data transmission medium. In a distributed processing environment, program modules and other data may be located in both local and remote storage media, including memory storage devices.

In one implementation, distribution of upgrades and updates for a vehicle audio system is controlled by encrypting the vehicle identification number (VIN) of a vehicle into the software package used for the upgrade or update. The software package can only be used to upgrade software residing on the vehicle corresponding to the VIN.

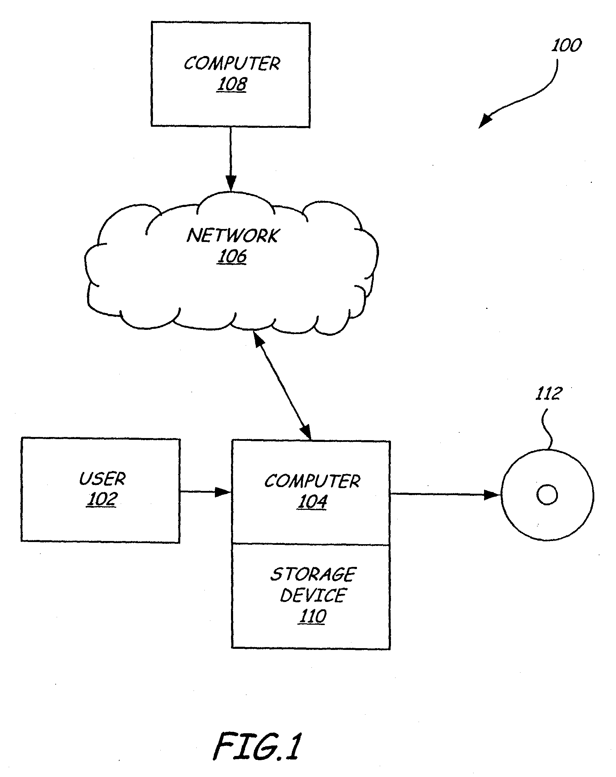

Referring now to the drawings, Figure 1 illustrates an example computer arrangement 100 for configuring a processor-controlled system operating in an operating environment. While not required, the processor-controlled system may be a vehicle audio system operating in an automobile or other vehicle. The vehicle has a vehicle identification number (VIN) that is uniquely associated with that vehicle. The VIN is stored in one or more systems of the vehicle, including, for example, the vehicle audio system. It will be appreciated by those skilled in the art that the processor-controlled system may be another electronic system operating in an automobile or other vehicle. Alternatively, the processor-controlled system may operate in an operating environment other than a vehicle.

A user 102, such as an end user, a dealer, or a worker on a vehicle assembly line, provides a computer 104 with an identification code that uniquely identifies the operating environment of the processor-controlled system. For example, if the processor-controlled system is a vehicle audio system, the user 102 may provide the computer 104 with the VIN that is uniquely associated with the vehicle in which the vehicle audio system is installed.

The computer 104 may communicate with a network 106, such as the Internet. Alternatively, the network 106 can be implemented as a different type of network, such as a local area network (LAN), wide area network (WAN), or wireless local area network (WLAN). Another computer 108, which may also communicate with the network 106, stores processor-executable instructions, such as program modules, that configure a processor-based system when executed by a processor. By way of illustration and not limitation, the computer 108 may store software packages that upgrade the software in a vehicle audio system to remedy bugs or add new features to the vehicle audio system. For example, some such software packages may add one or more compressed audio decoders to the vehicle audio system to read audio files stored in the MP3, MP3 Pro, WMA, AAC, Real Audio, or other compressed audio formats.

The computer 108 receives the identification code from the computer 104 through the network 106. As an alternative, the computer 108 may receive the identification code via a direct connection to the computer 104, without the use of a network. If the network 106 is implemented as the Internet, the computer 108 may host a website to which the computer 104 is connected. The user 102 may then enter the identification code using the website.

The computer 108 encrypts the identification code into the software package or packages to be delivered to the user 102, thereby generating encrypted data. Any of a variety of known encryption techniques can be used to encrypt the identification code. The computer 104 then downloads the encrypted data from the website and stores the encrypted data on a storage device 110, such as a hard disk drive or a memory device. The encrypted data is then stored on a data storage medium, such as a CD-ROM disc 112, which can be received in the processor-controlled system. As an alternative, the encrypted data can be delivered directly to the processor-controlled system as a modulated data signal, that is, a signal that has one or more of its characteristics set or changed in such a manner as to encode information in the signal. The modulated data signal can be transmitted to the processor-controlled system via a wired or a wireless medium.

The computer 108 preferably obtains payment information from the user 102 before delivering the encrypted data to the computer 104. By collecting payment for each transmission of encrypted data, the computer 108 ensures that the appropriate royalty and other fees are collected from each end user. In the case of adding a compressed audio decoder to a vehicle audio system, both the manufacturer of the software used to upgrade the vehicle audio system and the owner of the intellectual property covering the new compressed audio decoder can be compensated appropriately.

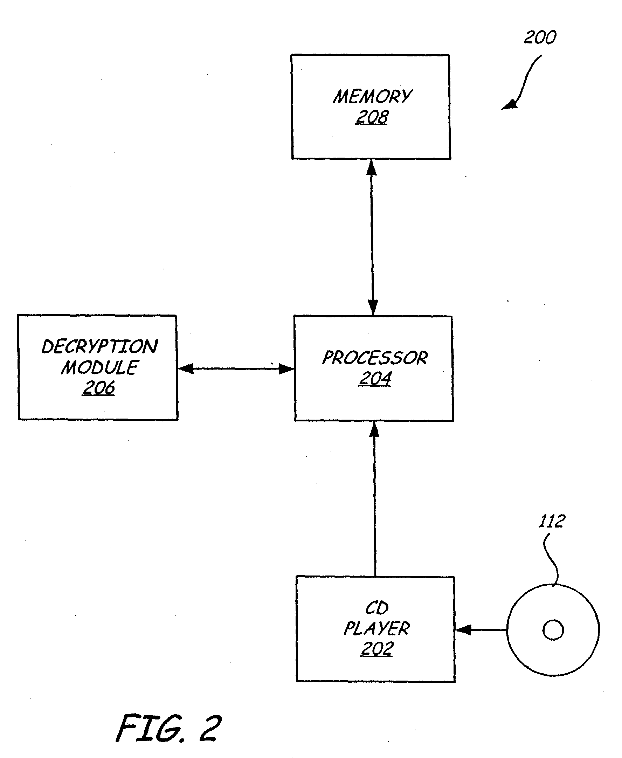

Figure 2 illustrates an example processor-controlled system 200. The processor-controlled system 200 may be implemented as a vehicle audio system installed in an automobile or other vehicle. Alternatively, the processor-controlled system 200 can be implemented as another system within the vehicle, or as a system in an operating environment other than a vehicle.

The processor-controlled system 200 is typically configured to operate with one or more types of processor readable media. Processor readable media can be any available media that can be accessed by the processor-controlled system 200 and includes both volatile and nonvolatile media, removable and non-removable media. By way of example, and not limitation, processor readable media may include storage media and communication media. Storage media includes both volatile and nonvolatile, removable and nonremovable media implemented in any method or technology for storage of information such as processor-readable instructions, data structures, program modules, or other data. Storage media includes, but is not limited to, RAM, ROM, EEPROM, flash memory or other memory technology, CD-ROM, digital versatile discs (DVDs) or other optical disc storage, magnetic cassettes, magnetic tape, magnetic disk storage or other magnetic storage devices, or any other medium that can be used to store the desired information and that can be accessed by the processor-controlled system 200. Communication media typically embodies processor-readable instructions, data structures, program modules or other data in a modulated data signal such as a carrier wave or other transport mechanism and includes any information delivery media. The term "modulated data signal" means a signal that has one or more of its characteristics set or changed in such a ) manner as to encode information in the signal. By way of example, and not limitation, communication media includes wired media such as a wired network or direct-wired connection, and wireless media such as acoustic, RF, infrared, and other wireless media. Combinations of any of the above are also intended to be included within the scope of processor-readable media.

The processor-controlled system 200 includes an input subsystem. If the processor-controlled system 200 is implemented as a vehicle audio system, the input subsystem may be a CD player 202 that is configured to read the CD-ROM disc 112, which contains a set of instructions encrypted with a validation code, *e.g.*, the VIN of the vehicle for which a software upgrade is authorized. Alternatively, the input subsystem may be a wireless communication device that receives a modulated data signal carrying the encrypted set of instructions.

The input subsystem provides the encrypted set of instructions to a processor 204. The processor 204 may be either integrated with or distinct from other processors operating in the processor-controlled system 200, such as a digital signal processor (DSP). The processor 204 decrypts the encrypted set of instructions using a decryption module 206, which may be embodied in hardware, software, or firmware, singly or in combination. Decryption may be performed according to any of a variety of known algorithms, provided that the particular decryption algorithm used is compatible with the encryption algorithm used to produce the encrypted set of instructions. As a result of this decryption process, the processor 204 extracts the validation code from the encrypted set of instructions.

The processor 204 then compares the validation code with an identification code, such as the VIN of the vehicle in which the processor-controlled system 200 is installed. The identification code is provided by a memory 208, which may be integrated with or distinct from the processor 204 and may be implemented either within the processor-controlled system 200 or in another system of the operating environment. Matching the validation code with the identification code establishes that the vehicle in which the processor-controlled system 200 is installed is in fact authorized for upgrading, *e.g.*, that the end user purchased an upgrade and paid the appropriate royalty fees. If the validation code and the identification code match, the processor 204 applies the authorized upgrade. For example, the set of instructions may represent a software package that upgrades software in a vehicle audio system to remedy bugs or add new features to the vehicle audio system. Some such software packages may add one or more compressed audio decoders to the vehicle audio system to read audio files stored in the MP3, MP3 Pro, WMA, AAC, Real Audio, or other compressed audio formats.

If the validation code does not match the identification code, it is likely that the end user is attempting to install an unauthorized upgrade. Accordingly, the processor 204 does not apply the upgrade. With the upgrade applied only if the validation code and the identification code match, collection of royalty and other fees is ensured.

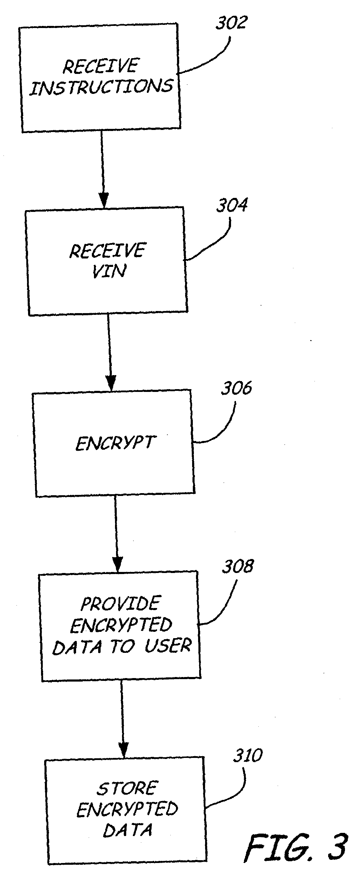

Figure 3 is a flow diagram illustrating an example method for generating a CD-ROM or other medium to configure the processor-controlled system 200, which is implemented, for example, as a vehicle audio system. It will be appreciated by those skilled in the art that the general principles described in connection with Figure 3 are also applicable to techniques for configuring other types of processor-controlled systems.

A computer, such as a server in a client-server arrangement, receives a set of instructions (302). The instructions may be received from any of a variety of storage locations, such as a memory device, a hard drive or other storage medium, or another computer. The instructions can form part of a software package for upgrading the processor by adding features to or removing bugs from the existing software. For example, the software package may upgrade a vehicle audio system by adding one or more compressed audio decoders for reading audio files stored in the MP3, MP3 Pro, WMA, AAC, Real Audio, or other compressed audio formats.

The computer also receives a VIN from a user (304) via, for example, an Internet connection. The VIN provided by the user corresponds to the vehicle for which the user has purchased an upgrade. The instructions are then encrypted with the VIN (306) using any of a variety of known encryption algorithms. With the instructions encrypted in this way, it is ensured that the upgrade can only be applied to the vehicle audio system installed in the particular vehicle associated with the VIN. After the instructions have been encrypted, the resulting encrypted data is provided to the user (308), for example, via the Internet connection. The user may then store the encrypted data (310) on a CD-ROM or other medium that can be received in the vehicle audio system.

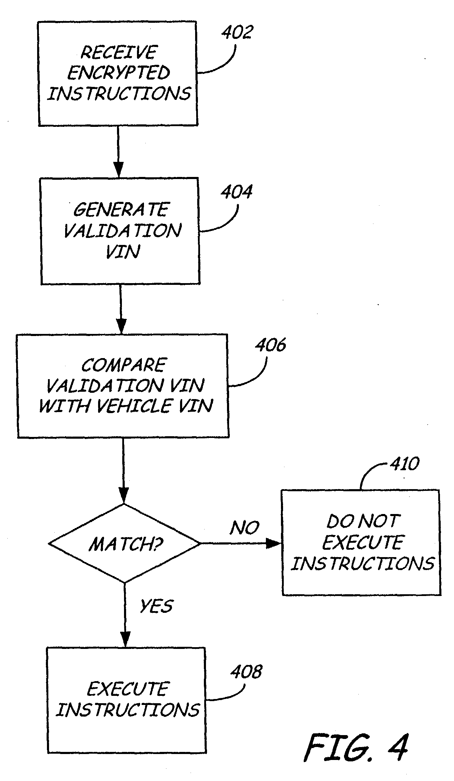

Figure 4 is a flow diagram illustrating an example method for configuring the processor-controlled system 200, which is implemented, for example, as a vehicle audio system. It will be appreciated by those skilled in the art that the general principles described in connection with Figure 4 are also applicable to techniques for configuring other types of processor-controlled systems.

A set of encrypted instructions is received in a processor (402). The encrypted instructions may be received via a CD-ROM or other tangible medium. Alternatively, the encrypted instructions may be received as a modulated data signal via a wired or wireless communication link. The processor may receive the set of encrypted instructions as a software package for upgrading the processor by adding features to or removing bugs from the existing software. For example, the software package may upgrade a vehicle audio system by adding one or more compressed audio decoders for reading audio files stored in the MP3, MP3 Pro, WMA, AAC, Real Audio, or other compressed audio formats. In one embodiment, the instructions are encrypted with the VIN associated with a vehicle for which the upgrade is authorized. The VIN may be encrypted in the instructions using any of a variety of well-known encryption techniques.

This VIN is extracted from the instructions (404) by decrypting the instructions. Decryption may be performed using any decryption technique that is compatible with the encryption algorithm used to encrypt the VIN into the instructions. For purposes of the discussion of Figure 4, this VIN is known as a validation VIN. The validation VIN is compared with the VIN associated with the vehicle in which the vehicle audio system is installed (406). If the VIN of the vehicle matches the validation VIN, the processor executes the instructions (408), thereby accomplishing the authorized upgrade. On the other hand, if the VIN of the vehicle does not match the validation VIN, the processor does not execute the instructions (410), and the upgrade is not performed. Accordingly, the upgrade is performed only if it has been authorized, *i.e.*, if the user has paid the required fees.

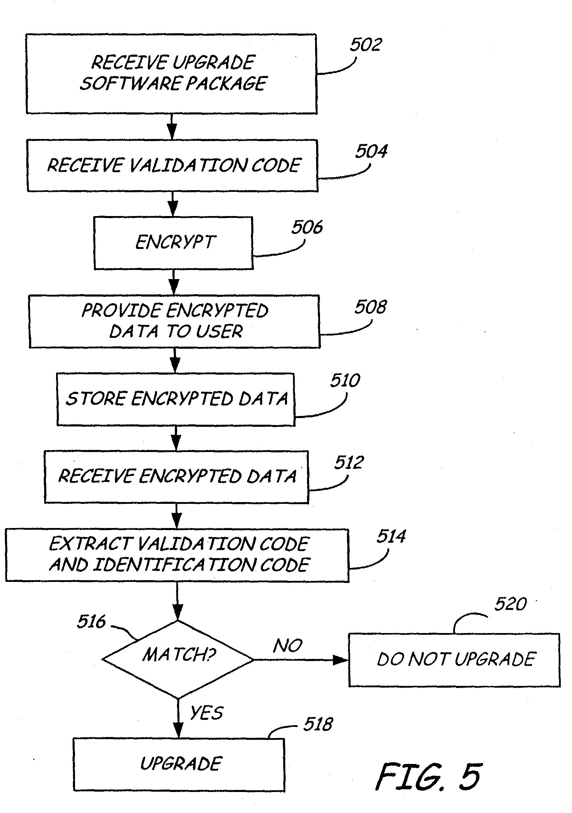

Figure 5 is a flow diagram illustrating an example method for configuring the processor-controlled system 200, which is implemented, for example, as a vehicle audio system. It will be appreciated by those skilled in the art that the general principles described in connection with Figure 5 are also applicable to techniques for configuring other types of processor-controlled systems.

A computer, such as a server in a client-server arrangement, receives an upgrade software package (502) from any of a variety of storage locations, including, for example, a memory device, a hard drive or other storage medium, or another computer. The upgrade software package may include a set of instructions for upgrading the processor by adding features to or removing bugs from the existing software. For example, the software package may upgrade a vehicle audio system by adding one or more compressed audio decoders for reading audio files stored in the MP3, MP3 Pro, WMA, AAC, Real Audio, or other compressed audio formats.

The computer also receives a validation code from a user (504) via, for example, an Internet connection. This validation code may be a VIN that corresponds to the vehicle for which the user has purchased an upgrade. The instructions are then encrypted with the validation code (506) using any of a variety of known encryption algorithms. With the instructions thus encrypted, the upgrade can only be applied to the vehicle audio system installed in the particular vehicle associated with the validation code. After the instructions have been encrypted, the resulting encrypted data is provided to the user (508), for example, via the Internet connection. The user may then store the encrypted data (510) on a CD-ROM or other medium that can be received in the vehicle audio system.

This medium is then received in a vehicle audio system (512), which is associated with an identification code, *e.g.*, the VIN of the vehicle in which it is installed. Alternatively, the vehicle audio system may receive the encrypted data as a modulated data signal using a wired or wireless communication link. A processor in the vehicle audio system decrypts the encrypted data, thereby extracting the validation code (514). The validation code thus extracted is compared with the identification code associated with the vehicle audio system (516). If the codes match, the upgrade is applied (518). If the codes do not match, the processor determines that the upgrade was not authorized and does not apply the upgrade (520).

As demonstrated by the foregoing discussion, various embodiments of the present invention may circumvent sharing of a single software package among multiple end users. Each user who desires an upgrade must pay the appropriate royalty and other user fees associated with the upgrade. Facilitation of fee collection may be particularly beneficial for vehicle audio systems that employ compressed audio decoders that may be subject to intellectual property protection. In this case, both the manufacturer of the software used to upgrade the CD player and the owner of the intellectual property covering the new compressed audio decoder can be compensated appropriately.

It will be understood by those who practice the invention and those skilled in the art that various modifications and improvements may be made to the invention without departing from the spirit and scope of the disclosed embodiments. The scope of protection afforded is to be determined solely by the claims and by the breadth of interpretation allowed by law.

## Claims

1. A method to generate a medium to configure a processor-controlled system operating in an operating environment, the method comprising:
receiving a set of instructions to configure the processor-controlled system; and
encrypting the set of instructions as a function of an identification code unique to the operating environment.

2. The method of claim 1, wherein the operating environment comprises a vehicle and the identification code comprises a vehicle identification number (VIN).

3. The method of claim 1, wherein the processor-controlled system comprises an audio system.

4. The method of claim 1, further comprising receiving the identification code.

5. The method of claim 4, further comprising using the Internet to receive the identification code.

6. The method of claim 1, further comprising transmitting the encrypted set of instructions using the Internet.

7. The method of claim 1, further comprising storing the encrypted set of instructions using a data storage medium.

8. A method to configure a processor-controlled system operating in an operating environment, the method comprising:
receiving an encrypted set of instructions;
decrypting the encrypted set of instructions to generate a validation code;
comparing the validation code with a identification code unique to the operating environment; and
configuring the processor-controlled system as a function of the decrypted set of instructions only if the validation code matches the identification code.

9. The method of claim 8, wherein the operating environment comprises a vehicle and at least one of the validation and identification codes comprises a vehicle identification number (VIN).

10. The method of claim 8, wherein the processor-controlled system comprises an audio system.

11. The method of claim 10, further comprising configuring the audio system to recognize a compressed audio format.

12. The method of claim 8, further comprising receiving the identification code from the processor-controlled system.

13. The method of claim 8, further comprising receiving the identification code from another system operating in the operating environment.

14. The method of claim 8, further comprising receiving the encrypted set of instructions using at least one of a data storage medium and a wireless signal.

15. A processor-readable medium having processor-executable instructions for:
receiving a set of instructions to configure a processor-controlled system operating in an operating environment; and
encrypting the set of instructions as a function of an identification code unique to the operating environment.

16. The processor-readable medium of claim 15, wherein the operating environment comprises a vehicle and the identification code comprises a vehicle identification number (VIN).

17. The processor-readable medium of claim 15, wherein the processor-controlled system comprises an audio system.

18. A processor-readable medium having processor-executable instructions for:
receiving an encrypted set of instructions;
decrypting the encrypted set of instructions to generate a validation code;
comparing the validation code with a identification code unique to an operating environment; and
configuring a processor-controlled system operating in the operating environment as a function of the decrypted set of instructions only if the validation code matches the identification code.

19. The processor-readable medium of claim 18, wherein the operating environment comprises a vehicle and at least one of the validation and identification codes comprises a vehicle identification number (VIN).

20. The processor-readable medium of claim 18, wherein the processor-controlled system comprises an audio system.

21. The processor-readable medium of claim 20, wherein the decrypted set of instructions comprises processor-executable instructions for configuring the audio system to recognize a compressed audio format.

22. A processor-readable medium comprising:
a set of processor-executable instructions for configuring a processor-controlled system operating in an operating environment; and
a validation code encrypted into the set of processor-executable instructions,
wherein the set of processor-executable instructions is configured to be executed only if the validation code matches an identification code unique to the operating environment.

23. The processor-readable medium of claim 22, wherein the operating environment comprises a vehicle and at least one of the validation and identification codes comprises a vehicle identification number (VIN).

24. The processor-readable medium of claim 22, wherein the processor-controlled system comprises an audio system.

25. The processor-readable medium of claim 24, wherein the set of processor-executable instructions comprises processor-executable instructions for configuring the audio system to recognize a compressed audio format.

26. A processor-controlled system (200) operating in an operating environment, the processor-controlled system of the type comprising an input subsystem configured to receive an encrypted set of instructions, the improvement comprising:
a processor (204) coupled to the input subsystem and configured to decrypt the encrypted set of instructions to generate a validation code,
compare the validation code with a identification code unique to the operating environment, and
configure the processor-controlled system (200) as a function of the decrypted set of instructions only if the validation code matches the identification code.

27. The processor-controlled system of claim 26, wherein the operating environment comprises a vehicle and at least one of the validation and identification codes comprises a vehicle identification number (VIN).

28. The processor-controlled system of claim 26, wherein the processor-controlled system (200) comprises an audio system.

29. The processor-controlled system of claim 28, wherein the processor (204) is further configured to configure the audio system to recognize a compressed audio format.

30. The processor-controlled system of claim 26, wherein the processor (204) is further configured to receive the identification code from another system operating in the operating environment.

31. The processor-controlled system of claim 26, wherein the input subsystem comprises at least one of a CD player (202) configured to read a CD-ROM disc and a wireless communication device configured to receive a wireless signal.
